# EUROPEAN PATENT APPLICATION

(11) **EP 0 794 215 A1**
(43) Date of publication of application: **10.09.1997**
(21) Application number: 97103866.6
(22) Date of filing: 07.03.1997
(51) Int. Cl.: C08J 5/18, C08L 29/04, C08K 5/06

(54) **Polyvinyl alcohol film**

(30) Priority: 07.03.1996 JP 80929/96
(71) Applicant: Kuraray Co., Ltd., Kurashiki-shi Okayama-ken (JP)
(72) Inventor: Kawai, Tsutomu, Sajio-shi, Ehime-ken (JP); Miyazaki, Hirotoshi, Kurashiki-shi, Okayama-ken (JP); Nakanishi, Toru, Higashiyama-ku, Kyoto-shi, Kyoto-fu (JP); Kobayashi, Hideo, Higashiyama-ku, Kyoto-shi, Kyoto-fu (JP); Fukunishi, Akira, c/o Sanyo Chemical Ind. Ltd., Kyoto-shi, Kyoto-fu (JP)
(74) Representative: VOSSIUS & PARTNER

(57) **Abstract**

There is provided according to the present invention, a polyvinyl alcohol film having a thickness of 10 to 100 µm which comprises a composition of 100 parts by weight of a polyvinyl alcohol (A) having a degree of hydrolysis of 70 to 100 mole% blended with 3 to 100 parts by weight of a compound (B) obtained by conducting an addition reaction of 1 to 4 moles of an alkylene oxide with one mole of a polyol having 3 to 6 hydroxy groups. The polyvinyl alcohol film of the present invention has little migration of plasticizer, little bleedout of a plasticizer onto the surface of the film, excellent heat sealability, little blocking tendency, and excellent durability even when being allowed to stand under various conditions.

## Description

The present invention relates to a polyvinyl alcohol (hereinafter abbreviated to PVA) film.

A PVA film has been widely used for package, etc. of textile products by taking full advantage of its excellent characteristics such as transparency, glossiness, antistaticity and toughness. A PVA film is flexible and tough under a high humidity owing to the plasticizing effect of moisture, but under a low humidity it loses its flexibility and becomes embrittled and apt to break. Accordingly, a plasticizer has been used in the PVA film to prevent it from being hardened and embrittled.

As a plasticizer for a PVA film, glycols, polyhydroxy alcohols, amines and the like have been used alone or in combination.

As glycols and polyhydroxy alcohols, there are available glycerol, polyethylene glycol, polypropylene glycol, polyglycerol, mannitol, sorbitol, pentaerythritol and the like, among which glycerol has been commonly used. However, during a long-term packaging, the bleeding of a plasticizer causes blocking of the films to each other, glycerol migrates to a textile product as a content in the package and thus the amount of the plasticizer in the film decreases. And as a result there has been a problem that the film properties turn hard and brittle, the film flexibility is remarkably degraded, and the film breaks during transportion and operation.

A variety of plasticizers have been investigated in order to eliminate the migration of the plasticizers. For example, since polyethylene glycol and polypropylene glycol as plasticizers are poor in compatibility with PVA, the bleeding of the plasticizer causes the blocking of the films to each other, and the poor plasticizing ability of such plasticizers on PVA requires an extremely large amount to be added in order to achieve a necessary plasticizing effect, which gives seriously unfavorable effect upon the film properties. Such tendency is similar to the cases of polyglycerol, mannitol, sorbitol, pentaerythritol and the like. In addition, a plasticizer in the form of a solid at ordinary temperature such as sorbitol involves the problem that it migrates to the film surface and deposits its powder thereon.

An object of the present invention is to solve the above-mentioned problems and thereby to provide a PVA film which has little migration of plasticizer, little change in the film properties with the lapse of time, excellent heat sealability and excellent durability when being allowed to stand.

This object was achieved by providing a polyvinyl alcohol film having a thickness of 10 to 100 µm which comprises a composition of 100 parts by weight of a polyvinyl alcohol (A) having a degree of hydrolysis of 70 to 100 mole% blended with 3 to 100 parts by weight of a compound (B) obtained by conducting an addition reaction of 1 to 4 moles of an alkylene oxide with one mole of a polyol having 3 to 6 hydroxy groups. The present invention has been accomplished on the basis of such finding.

The PVA (A) to be used in the present invention is a hydrolysis product of a polyvinyl ester.

The vinyl ester for producing the PVA (A) is exemplified by vinyl acetate, vinyl propionate, vinyl formate, vinyl versatate and vinyl pivalate. Of these, there is usually used vinyl acetate which is industrially produced and advantageous in cost.

The polyvinyl ester can be produced by polymerizing a vinyl ester in bulk or in a solvent such as an alcohol in the presence of a radical initiator, and then partially or highly hydrolyzing the resulting polyvinyl ester in the presence of an alkali or acid catalyst.

The degree of polymerization of the PVA preferably is 300 to 8000, more preferably 500 to 3000 expressed in terms of viscosity-average degree of polymerization (hereinafter, abbreviated to degree of polymerization) from the viewpoint of the strength and toughness of the PVA film. When the degree of polymerization is less than 300, the film strength possibly is lowered, and when it is more than 8000, the viscosity of the solution could increase at the time of preparing the film, thus causing a problem in workability.

The degree of hydrolysis of the PVA exerts a great influence upon the strength, nerve and bag producibility of the PVA film, and it is 70 to 100 mole%, preferably 80 to 100 mole%, more preferably 95 to 100 mole%, more preferably 98 to 100 mole%, more preferably 99 to 100 mole%, most preferably 99.1 to 99.96 mole%.

In particular, the PVA film having a degree of hydrolysis of 99.1 to 99.96 mole% is particularly suited for package of textile products, since it has highly excellent characteristics that are not imparted to a PVA film having a degree of hydrolysis of 99.0 mole% or less or a degree of hydrolysis of 100.00 mole% with respect to the strength, nerve, transparency, water resistance and the like.

When the degree of hydrolysis is less than 70 mole%, the film strength is lowered, film casting from aqueous solution is difficult because the PVA becomes water-insoluble, and the compatibility of PVA (A) with the compound (B) to be used in the present invention is difficult to appear.

The compound (B) to be used in the present invention is obtained by conducting an addition reaction of 1 to 4 moles of an alkylene oxide with one mole of a polyol with 3 to 6 hydroxy groups.

The compound (B) which is obtained by conducting an addition reaction of 1 to 4 moles of an alkylene oxide with one mole of a polyol with 3 to 6 hydroxy groups, being preferably in the form of a liquid at ordinary temperature, has excellent compatibility with PVA (A), excellent plasticizing ability for the PVA (A), and has little migration outside the film, little bleedout and little blocking tendency.

The polyol with 3 to 6 hydroxy groups as the starting material for the compound (B) is exemplified by glycerol, trimethylolpropane, diglycerol, pentaerythritol, xylose, arabinose, ribulose and sorbitol. Of these, glycerol, pentaerythritol and sorbitol are preferable, and sorbitol is most preferable which has a highly excellent plasticizing ability for the PVA (A) having a degree of hydrolysis of 99 mole% or more.

The alkylene oxide as another starting material for the compound (B) is exemplified by ethylene oxide and propylene oxide. Of these, ethylene oxide is preferable. Moreover, ethylene oxide and propylene oxide may be mixed and subjected to addition reaction, as the case may be. The number of moles of the alkylene oxide to be added is preferably 2 to 3 moles. In the case where an average number of moles of the alkylene oxide to be added is less than 1 mole, the problem of plasticizer-migration arises. On the contrary, in the case where an average number of moles thereof is more than 4 moles, the compatibility with the PVA (A) is lowered, thereby lowering the plasticizing effect. The number of moles as mentioned herein is the average number of moles, which permits a distribution of the numbers of the moles to be added. It is unfavorable, however, to mix an amount of 50% or more by weight of an addition compound having 5 moles or more.

The blending amount of the compound (B) per 100 parts by weight of the PVA (A) is 3 to 100 parts by weight, preferably 3 to 30 parts by weight, more preferably 3 to 14 parts by weight, more preferably 3 to 13 parts by weight, particularly preferably 3 to 11 parts by weight. In the case where the blending amount of the compound (B) is less than 3 parts by weight, the PVA film has insufficient flexibility. On the contrary, in the case where the blending amount of the compound (B) is more than 100 parts by weight, there arise the problems of decrease in film strength, blocking tendency and poor bag-producibility.

As a method for producing a film from the composition of the PVA (A) and the compound (B) according to the present invention, one of the various methods is employed, including a method in which an aqueous solution of the composition is cast onto a hot roll.

The thickness of the film according to the present invention is 10 to 100 µm, preferably 20 to 75 µm.

The composition according to the present invention may be optionally blended with an ordinary additive such as coloring material, perfume, extending agent, defoaming agent, releasing agent and inorganic powder according to demand.

In the PVA film according to the present invention, there may be used as the case may be, a plasticizer (C) which is generally used as a plasticizer for the PVA (A) in combination with the compound (B) to the extent that such a plasticizer does not impair the characteristics of the present invention. Examples of the plasticizer (C) include a polyhydroxy alcohol such as glycerol, diglycerol and diethylene glycol; a polyether such as polyethylene glycol and polypropylene glycol; a phenol derivative such as bisphenol A and bisphenol S; an amide compound such as N-methylpyrrolidone; and water. The blending amount of the plasticizer (C) per 100 parts by weight of the PVA (A) is preferably 0 to 11 parts by weight, more preferably 1 to 11 parts by weight, particularly preferably 3 to 10 parts by weight. The polyvinyl alcohol film of the present invention is well suited for use in package, etc. of textile products, since it has excellent mechanical strength, excellent flexibility, little migration of plasticizer, little bleedout of a plasticizer onto the surface of the film, excellent heat sealability, little blocking tendency, and excellent durability even when being allowed to stand under various conditions.

The textile products are exemplified by men's shirt, blouse, sack suit, suit, dress, trousers, skirt, under wear, socks and stockings, glove, sweater, pill yarn, etc. each made from any of the materials such as polyester, cotton, polyester/cotton mixed fiber spinning, acrylics, nylon and rayon.

In the following, the present invention will be described in more detail with reference to the examples, which however shall not limit the present invention thereto.

The following describes the methods for evaluating migration of plasticizer in the film, heat sealability of the film and durability of the film when being allowed to stand.

### Migration of plasticizer

As an acceleration test of migration of the plasticizer in the film at the time of packaging a textile product, a film was covered at both sides with a cloth made of 100% cotton, and was allowed to stand in an atmosphere of 30°C and 85% RH for 10 days. Measurements were made of the amounts of the plasticizer in the film before and after the shelf test. The amount of the plasticizer in the film was determined by a method in which a film sample was dried in a vacuum dryer at 50°C for 5 hours to remove moisture in the sample and then was subjected to Soxhlet extraction with methanol, and the loss in weight of the film by the Soxhlet extraction was measured to give the amount of the plasticizer in the film. The residual rate of the plasticiser was expressed by the quotient in % obtained by dividing the amount of the plasticizer after the shelf test by the amount of the plasticizer before the shelf test.

### Heat sealability

A film was folded and both ends of the film were heat sealed at 200°C for one second to form a bag with a width of 40 cm and a length of 50 cm. The proportion of the film portion bonded to each other to the heat pressed portion (sealing rate) is expressed by the following symbols.
- ⓞ:: sealing rate of 95% or more
- ○:: sealing rate of 90% or more and less than 95%
- △:: sealing rate of 70% or more and less than 90%
- ▲:: sealing rate of 20% or more and less than 70%
- X:: sealing rate of less than 20%

### Durability when being allowed to stand

A men's shirt made of polyester/cotton mixed fiber spinning was packed in a bag obtained above, and 20 packages were colletively placed in a corrugated fiberboard box. The box was allowed to stand at 20°C and 65% RH (relative humidity) for one month, and for further one weak at 5°C and 65% RH and then was dropped onto a concrete floor at a position with a height of 3 m therefrom. The box was opened and the conditions of the bag were observed to examine the number of bags with a craze or crack in the film among 20 packages.

In the same manner as the case of the men's shirt, an examination was made on the durability of bags for a sweater made of wool when being allowed to stand under the above-mentioned conditions.

### Example 1

An aqueous solution of a composition was prepared which was obtained by blending 100 parts by weight of a PVA having a degree of polymerization of 1700 and a degree of hydrolysis of 99.9 mole% with 10 parts by weight of a compound obtained by conducting an addition reaction of one mole of ethylene oxide with one mole of sorbitol. The resultant solution was cast onto a hot roll at 60°C to prepare a PVA film with a thickness of 40 µm. The evaluation results for the migration of the plasticizer in the film thus prepared, heat sealability thereof and durability thereof when being allowed to stand are given in Table 1.

### Example 2

An aqueous solution of a composition was prepared which was obtained by blending 100 parts by weight of a PVA having a degree of polymerization of 1700 and a degree of hydrolysis of 99.9 mole% with 10 parts by weight of a compound obtained by conducting an addition reaction of 2 moles of ethylene oxide with one mole of sorbitol. The resultant solution was cast onto a hot roll at 60°C to prepare a PVA film with a thickness of 40 µm. The evaluation results for the film thus prepared are given in Table 1.

### Example 3

An aqueous solution of a composition was prepared which was obtained by blending 100 parts by weight of a PVA having a degree of polymerization of 1200 and a degree of hydrolysis of 99.6 mole% with 10 parts by weight of a compound obtained by conducting an addition reaction of 3 moles of ethylene oxide with one mole of sorbitol. The resultant solution was cast onto a hot roll at 60°C to prepare a PVA film with a thickness of 40 µm. The evaluation results for the film thus prepared are given in Table 1.

### Example 4

An aqueous solution of a composition was prepared which was obtained by blending 100 parts by weight of a PVA having a degree of polymerization of 2400 and a degree of hydrolysis of 99.3 mole% with 10 parts by weight of a compound obtained by conducting an addition reaction of 4 moles of ethylene oxide with one mole of sorbitol. The resultant solution was cast onto a hot roll at 60°C to prepare a PVA film with a thickness of 40 µm. The evaluation results for the film thus prepared are given in Table 1.

### Example 5

An aqueous solution of a composition was prepared which was obtained by blending 100 parts by weight of a PVA having a degree of polymerization of 1700 and a degree of hydrolysis of 99.1 mole% with 7 parts by weight of a compound obtained by conducting an addition reaction of 2 moles of ethylene oxide with one mole of sorbitol. The resultant solution was cast onto a hot roll at 60°C to prepare a PVA film with a thickness of 40 µm. The evaluation results for the film thus prepared are given in Table 1.

### Example 6

An aqueous solution of a composition was prepared which was obtained by blending 100 parts by weight of a PVA having a degree of polymerization of 1700 and a degree of hydrolysis of 99.9 mole% with 15 parts by weight of a compound obtained by conducting an addition reaction of 2 moles of ethylene oxide with one mole of sorbitol. The resultant solution was cast onto a hot roll at 60°C to prepare a PVA film with a thickness of 40 µm. The evaluation results for the film thus prepared are given in Table 1.

### Example 7

An aqueous solution of a composition was prepared which was obtained by blending 100 parts by weight of a PVA having a degree of polymerization of 1700 and a degree of hydrolysis of 99.9 mole% with 7 parts by weight of a compound obtained by conducting an addition reaction of 2 moles of ethylene oxide with one mole of sorbitol and 5 parts by weight of glycerol. The resultant solution was cast onto a hot roll at 60°C to prepare a PVA film with a thickness of 40 µm. The evaluation results for the film thus prepared are given in Table 1.

### Example 8

An aqueous solution of a composition was prepared which was obtained by blending 100 parts by weight of a PVA having a degree of polymerization of 1700 and a degree of hydrolysis of 99.9 mole% with 10 parts by weight of a compound obtained by conducting an addition reaction of 2 moles of ethylene oxide with one mole of glycerol. The resultant solution was cast onto a hot roll at 60°C to prepare a PVA film with a thickness of 40 µm. The evaluation results for the film thus prepared are given in Table 1.

### Comparative Example 1

An aqueous solution of a composition was prepared which was obtained by blending 100 parts by weight of a PVA having a degree of polymerization of 1700 and a degree of hydrolysis of 99.9 mole% with 10 parts by weight of glycerol as plasticizer. The resultant solution was cast onto a hot roll at 60°C to prepare a PVA film with a thickness of 40 µm. The evaluation results for the film thus prepared are given in Table 1.

### Comparative Example 2

An aqueous solution of a composition was prepared which was obtained by blending 100 parts by weight of a PVA having a degree of polymerization of 1700 and a degree of hydrolysis of 99.9 mole% with 2 parts by weight of a compound obtained by conducting an addition reaction of 2 moles of ethylene oxide with one mole of sorbitol. The resultant solution was cast onto a hot roll at 60°C to prepare a PVA film with a thickness of 40 µm. The evaluation results for the film thus prepared are given in Table 1.

### Comparative Example 3

An aqueous solution of a composition was prepared which was obtained by blending 100 parts by weight of a PVA having a degree of polymerization of 1700 and a degree of hydrolysis of 99.9 mole% with 10 parts by weight of a compound obtained by conducting an addition reaction of 2 moles of ethylene oxide with one mole of sorbitol. The resultant solution was cast onto a hot roll at 60°C to prepare a PVA film with a thickness of 7 µm. The evaluation results for the film thus prepared are given in Table 1.

### Comparative Example 4

An aqueous solution of a composition was prepared which was obtained by blending 100 parts by weight of a PVA having a degree of polymerization of 1700 and a degree of hydrolysis of 99.9 mole% with 10 parts by weight of a compound obtained by conducting an addition reaction of 2 moles of ethylene oxide with one mole of sorbitol. The resultant solution was cast onto a hot roll at 60°C to prepare a PVA film with a thickness of 120 µm. The evaluation results for the film thus prepared are given in Table 1.

**Table 1**

| | Migration of Plasticizer (residual rate of plasticizer, %) | Heat sealability (sealing rate, %) | Durability when being allowed to stand (The number of crazed or cracked bags) | |
|---|---|---|---|---|
| | | | Men's shirt | Sweater |
| Example 1 | 89 | ⓞ | 0 | 0 |
| Example 2 | 89 | ⓞ | 0 | 0 |
| Example 3 | 90 | ⓞ | 0 | 0 |
| Example 4 | 92 | ⓞ | 0 | 0 |
| Example 5 | 92 | ⓞ | 0 | 0 |
| Example 6 | 87 | △ | 2 | 2 |
| Example 7 | 70 | ⓞ | 0 | 0 |
| Example 8 | 80 | ○ | 1 | 1 |
| Comparative Example 1 | 30 | ⓞ | 9 | 8 |
| Comparative Example 2 | 89 | ▲ | 18 | 17 |
| Comparative Example 3 | 45 | ⓞ | 20 | 20 |
| Comparative Example 4 | 90 | X | 3 | 4 |

## Claims

1. A polyvinyl alcohol film having a thickness of 10 to 100 µm which comprises a composition of 100 parts by weight of a polyvinyl alcohol (A) having a degree of hydrolysis of 70 to 100 mole% blended with 3 to 100 parts by weight of a compound (B) obtained by conducting an addition reaction of 1 to 4 moles of an alkylene oxide with one mole of a polyol having 3 to 6 hydroxy groups.

2. The polyvinyl alcohol film according to Claim 1 which comprises a composition of 100 parts by weight of the polyvinyl alcohol (A) blended with 3 to 13 parts by weight of the compound (B).

3. The polyvinyl alcohol film according to Claim 1 or 2 wherein the polyvinyl alcohol (A) has a degree of hydrolysis of 99 to 100 mole%.
